# EUROPÄISCHE PATENTSCHRIFT

(11) **EP 1 648 749 B1**
(45) Veröffentlichungstag und Bekanntmachung des Hinweises auf die Patenterteilung: **15.10.2008**
(21) Anmeldenummer: 04738548.9
(22) Anmeldetag: 26.05.2004
(51) Int. Cl.: B60S 1/32, B60S 1/34

(54) **WISCHVORRICHTUNG**
WIPER DEVICE
DISPOSITIF D'ESSUYAGE

(30) Priorität: 22.07.2003 DE 10333188
(43) Veröffentlichungstag der Anmeldung: 26.04.2006
(73) Patentinhaber: ROBERT BOSCH GMBH, 70442 Stuttgart (DE)
(72) Erfinder: WEILER, Michael, 363-9 Chungchongbuk-Do (KR); ZIMMER, Joachim, 77880 Sasbach (DE)
(86) Internationale Anmeldenummer: PCT/DE2004/001079
(87) Internationale Veröffentlichungsnummer: WO 2005/009810

(56) Entgegenhaltungen:
- EP-A- 0 299 708
- WO-A-20/04002788
- DE-A- 10 052 616

## Beschreibung

### Stand der Technik

Die Erfindung geht aus von einer Wischvorrichtung nach dem oberbegriff des Anspruchs 1.

Aus der DE 31 42 716 C2 ist eine gattungsbildende Wischvorrichtung bekannt. Die Wischvorrichtung umfasst einen Wischarm mit einer aus einem federelastischen Kunststoff gefertigten Wischstange, an deren freiem Ende ein Wischblatt befestigbar ist, sowie ein Befestigungsteil, mit dem die Wischstange gelenkfrei verbunden ist. Die Wischstange weist über ihre Länge ein konstantes Profil mit einem Kunststoffkern und einem den Kunststoffkern umschließenden Kunststoffmantel auf.

DE-A-10 052 616 offenbart den Oberbegriff des Anspruchs 1.

### Vorteile der Erfindung

Die Erfindung geht aus von einer Wischvorrichtung, insbesondere für ein Kraftfahrzeug, die einen Wischarm aufweist, der eine Wischstange zur Befestigung eines Wischblatts, ein mit der Wischstange gelenkfrei verbundenes Befestigungsteil und zumindest einen federelastischen Teilbereich umfasst.

Es wird vorgeschlagen, dass der Wischarm im Wesentlichen federelastisch von einer Arbeitskonfiguration in zumindest eine erste stabile Konfiguration überführbar ist, in der das Wischblatt in einem montierten Zustand des Wischarms montierbar und demontierbar ist, wodurch eine Demontage des Wischarms zum Zweck der Erneuerung des Wischblatts vorteilhaft vermieden und ein komfortables, im Wesentlichen verschleißfreies Abklappen des Wischarms, insbesondere zur Erneuerung des Wischblatts und zu Reinigungszwecken der Fahrzeugscheibe, ermöglicht werden kann. Erfindungsgemäß ist ein bistabiles Bauteil aus einem flachen Bauteil mit drei länglichen Abschnitten hergestellt. Unter gelenkfrei verbunden soll in diesem Zusammenhang verstanden werden, dass die Wischstange und das Befestigungsteil ohne eine materiell ausgeführte Schwenkachse verbunden sind, um die die Wischstange und das Befestigungsteil relativ zueinander schwenkbar wären. Bauteile, die infolge einer Materialverformung, insbesondere infolge einer elastischen Verformung, eine Relativbewegung zwischen der Wischstange bzw. Teilbereichen der Wischstange und dem Befestigungsteil ermöglichen, sollen in diesem Zusammenhang nicht als Gelenk angesehen werden und sollen insbesondere vom Schutzbereich mit umfasst sein, wie beispielsweise Filmscharniere, federelastische Teilstücke, federelastische Wischstangen usw.

Der Wischarm kann einteilig oder mehrteilig ausgeführt sein, wobei eine zumindest zweiteilige Ausführung mit einem von der Wischstange getrennten Befestigungsteil wegen der unterschiedlichen Anforderungen an die Materialeigenschaften vorteilhaft sein kann. Unter einer stabilen Konfiguration soll in diesem Zusammenhang insbesondere eine Konfiguration verstanden werden, in der der Wischarm zumindest ohne wesentliche Hältekraft eines Bedieners verharrt. Unter einer Arbeitskonfiguration soll insbesondere eine Konfiguration verstanden werden, in der der montierte Wischarm über das Wischblatt eine Auflagekraft auf eine zu wischende Fläche ausübt. Ferner soll unter einer im Wesentlichen federelastischen Überführung ein im Wesentlichen durch elastische Deformationen und durch eine Erhaltung der Materialeigenschaften gekennzeichneter Vorgang verstanden werden. Dabei kann der Überführungsvorgang jedoch auch das Öffnen einer Fixierung und/oder plastische Deformationen einzelner, zum Beispiel der Dämpfung der Abklappbewegung dienender Bauteile beinhalten.

In einer Ausgestaltung der Erfindung wird vorgeschlagen, dass der Wischarm in einem demontierten Zustand eine von der ersten stabilen Konfiguration verschiedene zweite stabile Konfiguration aufweist, in die sich der Wischarm im Wesentlichen federelastisch überführen lässt. Mittels der zweiten stabilen Konfiguration kann neben der ersten stabilen, als Montagestellung nutzbaren Konfiguration vorteilhaft eine stabile Anlieferstellung bereitgestellt werden. Ist zudem in der Menge der beim Überführen des Wischarms von der ersten in die zweite stabile Konfiguration auftretenden Konfigurationen die Arbeitskonfiguration enthalten, kann vorteilhaft in der Arbeitskonfiguration eine in Richtung der zweiten stabilen Konfiguration und damit in Richtung der zu wischenden Fläche wirkende Kraft erreicht werden.

Es wird vorgeschlagen, dass der federelastische Teilbereich zumindest eine gewölbte Ausformung aufweist, deren konvexe Seite in der ersten stabilen Konfiguration in eine erste Richtung weist und in der zweiten stabilen Konfiguration in eine zweite, insbesondere der ersten Richtung im Wesentlichen entgegengesetzte Richtung weist. Ein Umstülpen der gewölbten lokalen Ausformung kann im Gleichgewicht vorteilhaft eine große Änderung einer Form des Wischarms nach sich ziehen, so dass die lokale Ausformung eine Schalterfunktion für die Form des gesamten Wischarms übernehmen kann. Dabei kann der Wischarm eine oder mehrere unabhängige und/oder in Reihe und/oder parallel geschaltete Ausformungen dieser Art aufweisen. Besonders geeignet sind kalottenförmige oder in der Aufsicht ovale Ausformungen, mittels derer einfach ein bistabiles Bauteil mit einem federelastischen Teilbereich realisierbar ist. Ferner kann eine hohe Biegesteifigkeit zumindest in Wischbewegungsrichtung sichergestellt werden.

Weist der federelastische Teilbereich im Bereich der gewölbten Ausformung zumindest ein Loch auf, kann vorteilhaft erreicht werden, dass während der Überführungsbewegung zwischen einer stabilen Konfiguration und der Arbeitskonfiguration oder einer anderen stabilen Konfiguration nur kleine elastische Deformationen des Materials auftreten, wodurch einer Materialermüdung vorteilhaft vorgebeugt werden kann. Die Größe und die Form des Lochs kann vorteilhaft zur Bestimmung der während der Überführungsbewegung wirkenden Kräfte gewählt werden.

Eine weitere Realisierung eines bistabilen Wischarms kann dadurch erreicht werden, dass der federelastische Teilbereich zumindest einen bogenförmigen Abschnitt aufweist, der in der ersten stabilen Konfiguration eine Krümmung in eine erste Richtung und in der zweiten stabilen Konfiguration eine Krümmung in eine zweite Richtung aufweist, wodurch kostengünstig und einfach ein bistabiles Bauteil hergestellt werden kann, das sich vorteilhaft in die längliche Form des Wischarms integrieren lässt.

Zudem wird vorgeschlagen, dass zumindest ein Abschnitt des federelastischen Teilbereichs zumindest in einer stabilen Konfiguration unter einer Vorspannung steht. Die Vorspannung stellt einen Parameter dar, der vorteilhaft zur Einstellung der für die Überführungsbewegung aufzuwendenden Kraft genutzt werden kann. In der vorgespannten Konfiguration kann der Abschnitt formschlüssig, reibschlüssig oder stoffschlüssig fixiert werden.

Zudem kann vorteilhaft ein komfortables Überführen der Konfigurationen ineinander erreicht werden, wenn die Wischvorrichtung im Bereich des federelastischen Teilbereichs zumindest einen Anschlag aufweist, über den während eines Überführungsvorgangs zwischen stabilen Konfigurationen gezielt eine Kraft im Bereich des federelastischen Teilbereichs einleitbar ist. Die Kraft kann dabei über den Anschlag direkt im federelastischen Teilbereich oder über einen außerhalb des federelastischen Teilbereichs angeordneten Anschlag und über einen Hebelarm eingeleitet werden. Es kann vorteilhaft eine auf den Wischarm ausgeübte Kraft auf einen aktiven Abschnitt des federelastischen Teilbereichs, insbesondere direkt auf eine kalottenförmige Ausformung oder auf einen vorgespannten Bogen, konzentriert werden und starke, zu einer Materialermüdung führende Verformungen können ausgeschlossen werden. Zudem lässt sich durch den Anschlag vorteilhaft ein Umschlagpunkt während einer Überführungsbewegung zwischen zwei Konfigurationen einstellen. Der Umschlagpunkt trennt zwei Phasen während der Überführungsbewegung, in denen eine Rückstellkraft den Wischarm in Richtung von unterschiedlichen Konfigurationen treibt.

Ist der Anschlag an das Befestigungsteil angeformt und/oder ist der federelastische Teilbereich einstückig in die Wischstange integriert, können vorteilhaft die Zahl der Bauteile des Wischarms und der Montageaufwand reduziert werden. Auch andere Ausgestaltungen, in denen der Anschlag ein unabhängiges Bauteil darstellt oder an vom Befestigungsteil verschiedene Bauteile des Kraftfahrzeugs angeformt ist, sind denkbar. Dabei ist zudem eine einstückige Ausführung des federelastischen Teilbereichs mit dem Befestigungsteil denkbar.

Ist der federelastische Teilbereich als Stanz-Biegeblechteil ausgeführt, kann ein kostengünstiges Produkt erreicht werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

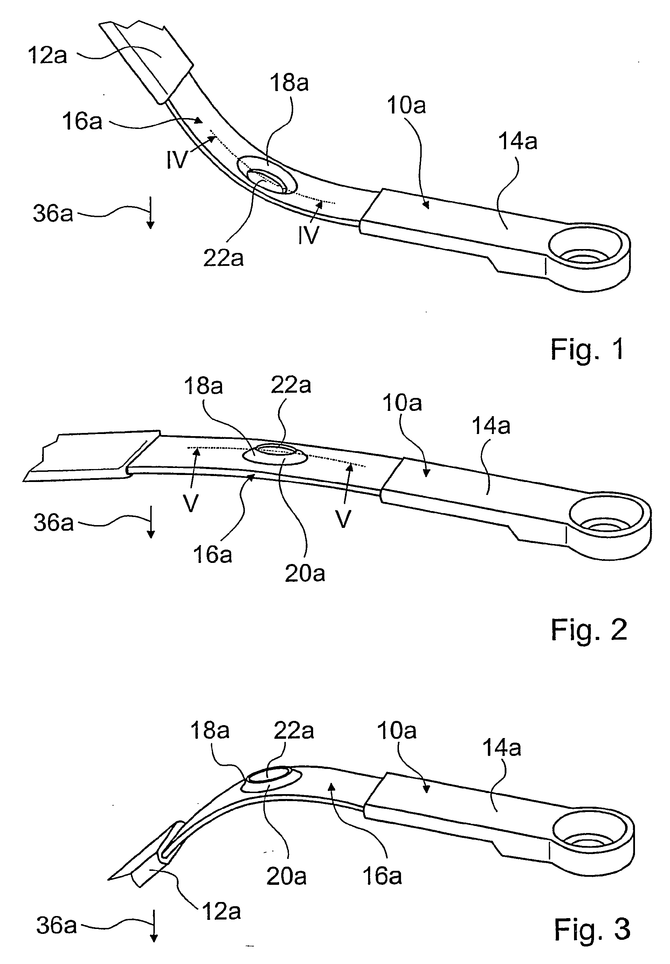

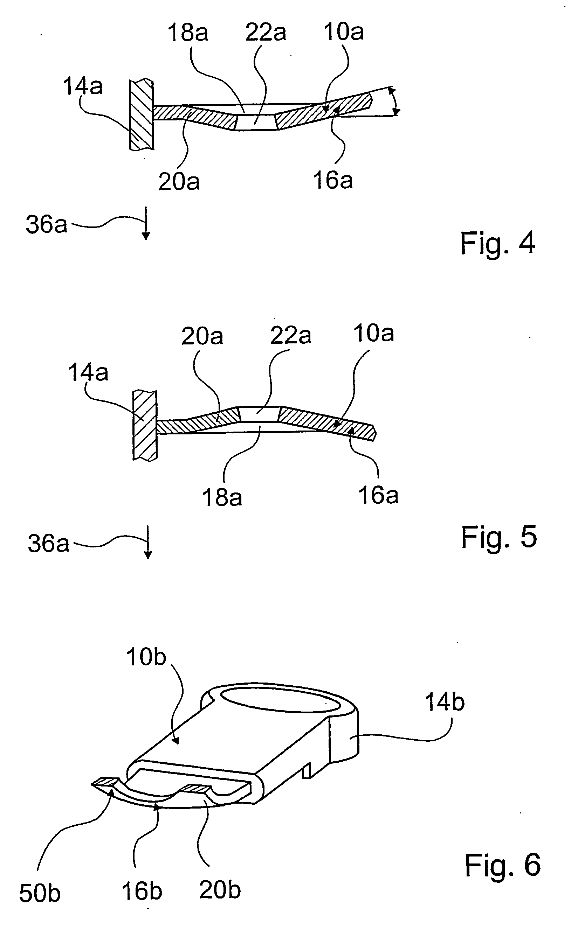

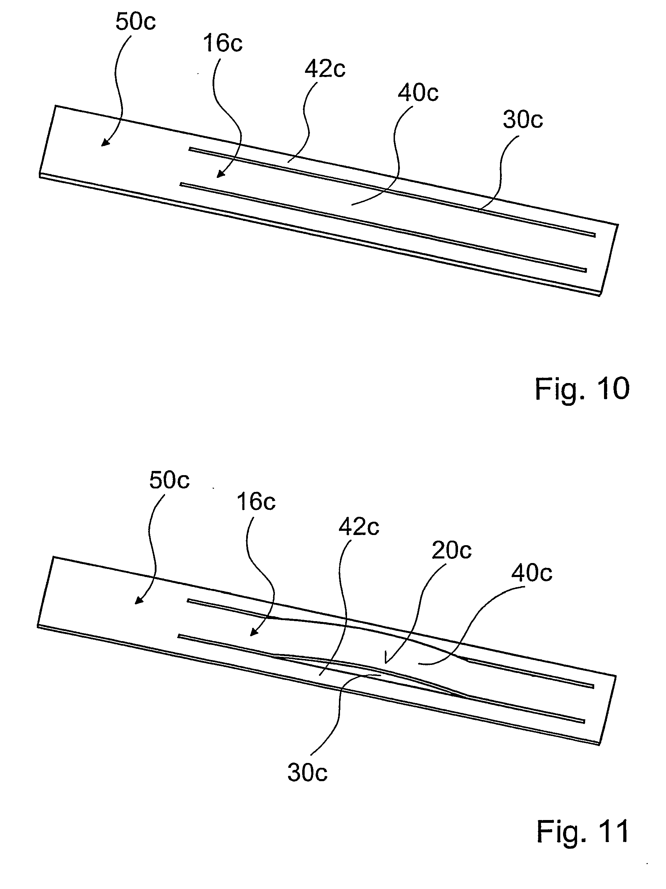

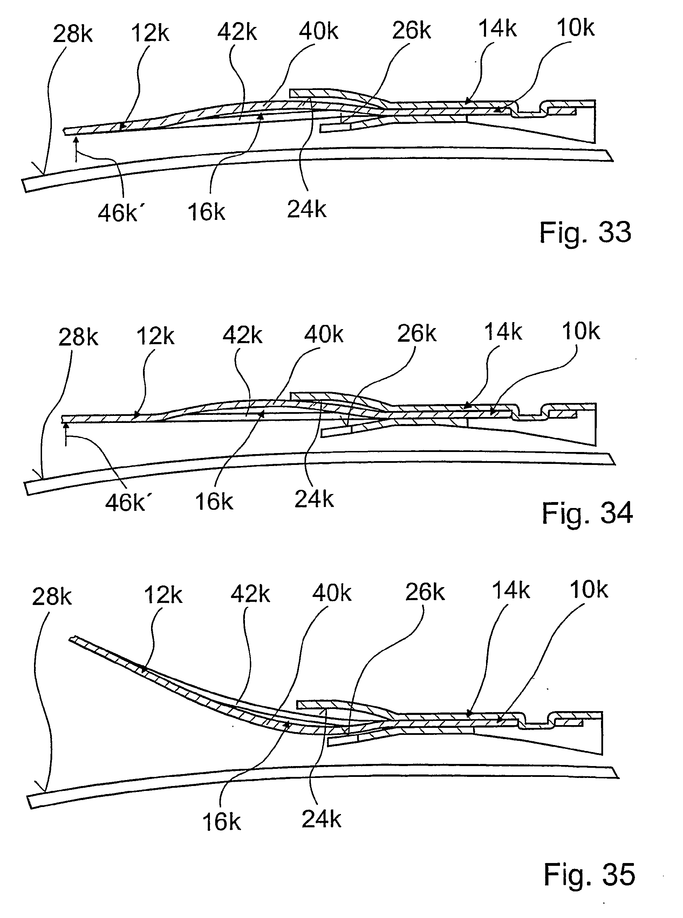

Es zeigen:
- Fig.: 1 - 3 einen Ausschnitt eines Wischarms mit einem federelastischen Teilbereich nicht von den Ansprüchen abgedeckt in einer ersten stabilen Konfiguration, in einer Arbeitskonfiguration und in einer zweiten stabilen Konfiguration,
- Fig.: 4 u. 5 einen Längsschnitt durch einen Teilbereich des Wischarms aus Fig. 1 und 3,
- Fig.: 6 ein Befestigungsteil eines alternativen gelenkfreien Wischarms sowie einen Abschnitt eines bistabilen Bauteils einer Wischstange nicht von den Ansprüchen abgedeckt,
- Fig.: 7 - 9 das bistabile Bauteil der Wischstange nach Fig. 6 in einer Form mit einer vorgeprägten Wölbung sowie in einer Rohform,
- Fig.: 10 u. 11 ein bistabiles Bauteil für einen weiteren alternativen Wischarm in einer Rohform und in einer Form mit einem gedehnten mittleren Abschnitt,
- Fig.: 12 - 14 den Wischarm mit dem bistabilen Bauteil nach Fig. 10 - 11 in einer ersten stabilen Konfiguration, in einer Arbeitskonfiguration und in einer zweiten stabilen Konfiguration,
- Fig.: 15 u. 16 ein bogenförmiges Bauteil und einen Rahmen in einem losen und in einem verschweißten Zustand für einen weiteren alternativen Wischarm,
- Fig.: 17 - 20 schematische Darstellungen zur Herstellung eines bistabilen Bauteils durch Vorspannen einzelner Abschnitte in Vorder- und Seitenansicht,
- Fig.: 21 - 32 federelastische Bauteile für weitere alternative Wischarme in Konfigurationen mit und ohne Vorspannung,
- Fig.: 33 - 37 Momentaufnahmen eines Vorgangs, bei dem ein weiterer alternativer Wischarm mit Anschlägen von einer Arbeitskonfiguration in eine erste stabile Konfiguration und zurück überführt wird,
- Fig.: 38 den Wischarm nach den Fig. 33 - 37 in einem montierten Zustand kurz vor einem Umschlagpunkt,
- Fig.: 39 u. 40 einen Ausschnitt des Wischarms aus den Fig. 33 - 38 in räumlicher Darstellung in zwei Konfigurationen und
- Fig.: 41 - 43 einen Ausschnitt eines weiteren alternativen Wischarms in räumlichen Darstellungen in zwei Konfigurationen.

### Beschreibung der Ausführungsbeispiele

Fig. 1 stellt einen Ausschnitt eines Wischarms 10a einer Wischvorrichtung eines Kraftfahrzeugs dar. Der Ausschnitt zeigt ein Befestigungsteil 14a, einen federelastischen Teilbereich 16a und einen Ausschnitt einer Wischstange 12a. Alle Teile 12a, 14a, 16a sind gelenkfrei miteinander verbunden. Der Wischarm 10a weist eine erste stabile Konfiguration auf, in der eine Montage und eine Demontage eines nicht dargestellten Wischblatts in einem montierten Zustand des Wischarms 10a möglich ist. Dabei weist der federelastische Teilbereich 16a eine gewölbte, kalottenförmige Ausformung 18a mit einem mittig angeordneten, runden Loch 22a auf, deren konvexe Seite 20a in Richtung 36a einer hier nicht dargestellten Fahrzeugscheibe weist (Fig. 1 und 4). Auch eine hier nicht dargestellte Ausführung der Ausformung ohne Loch ist möglich.

Fig. 2 stellt den Wischarm 10a in einer Arbeitskonfiguration und in Fig. 3 in einer zweiten stabilen Konfiguration dar, in die der Wischarm 10a aus der ersten stabilen Konfiguration heraus über die Arbeitskonfiguration federelastisch überführt werden kann. Aus der Arbeitskonfiguration in Fig. 2 treibt eine Spannkraft des federelastischen Teilbereichs 16a den Wischarm 10a in die Richtung 36a der zweiten stabilen Konfiguration (Fig. 3). In einem montierten Zustand des Wischarms 10a erzeugt die Spannkraft in der Arbeitskonfiguration eine Auflagekraft des Wischblatts auf die Fahrzeugscheibe. In der Arbeitskonfiguration und in der zweiten stabilen Konfiguration weist die konvexe Seite 20a der gewölbten Ausformung 18a in eine der Richtung 36a der Fahrzeugscheibe entgegengesetzte Richtung (Fig. 2 und 5).

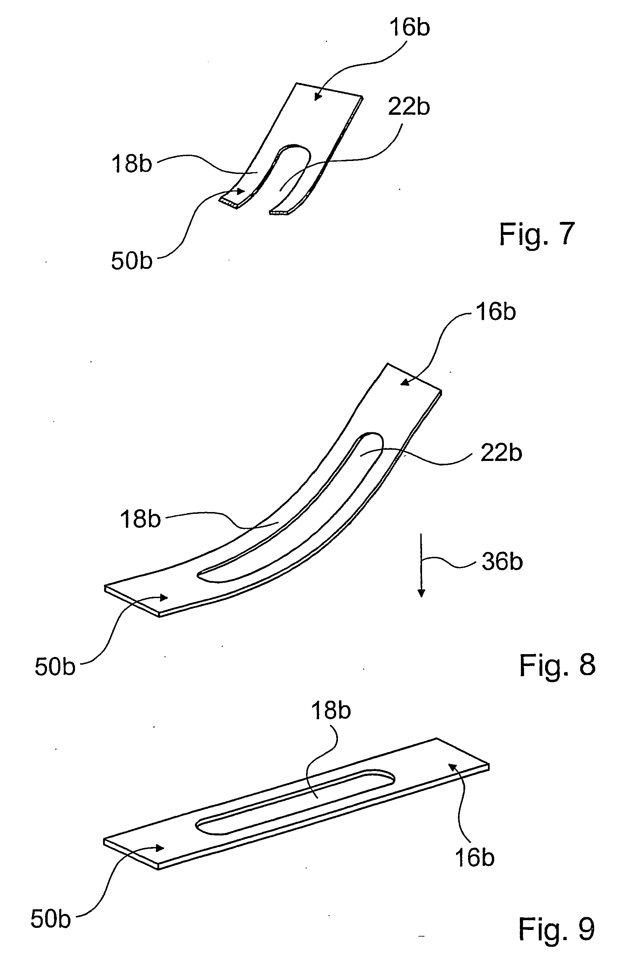

Fig. 6 - 9 stellen ein Befestigungsteil 14b sowie ein bistabiles Bauteil 50b eines alternativen gelenkfreien Wischarms 10b dar. An dem Befestigungsteil 14b ist ein separates, in einem Rohzustand flaches Bauteil 50b (Fig. 9) als federelastischer Teilbereich 16b befestigt. Das Bauteil 50b weist in einem in Fig. 7 und 8 dargestellten Zustand eine gewölbte Ausformung 18b auf. Im Bereich der gewölbten Ausformung 18b ist ein sich in Längsrichtung des Bauteils 50b erstreckendes, quer zur Längsrichtung mittig angeordnetes Langloch 22b ausgenommen. Unter Krafteinfluss kann die Ausformung 18b in eine einer ursprünglichen Richtung 36b (Fig. 8) entgegengesetzte Richtung umgestülpt werden, wodurch der Wischarm 10b zwischen zwei stabilen Konfigurationen wechselt.

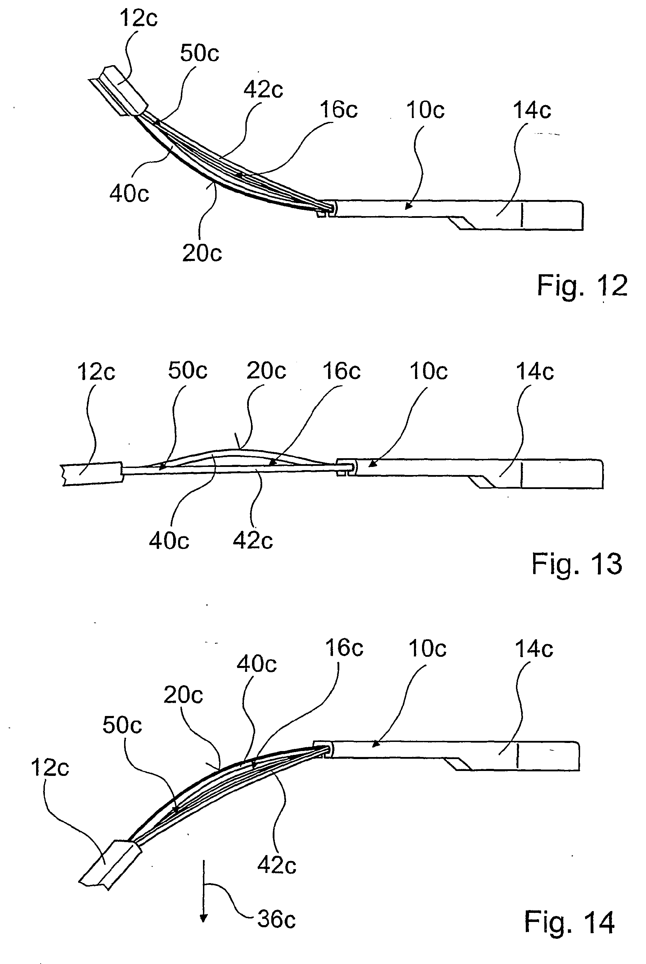

Ein bistabiles Bauteil 50c für einen weiteren alternativen Wischarm 10c ist in Fig. 10 und 11 dargestellt. Das in einem Rohzustand (Fig. 10) flache Bauteil 50c weist zwei parallele Längsschnitte 30c auf, die das Bauteil 50c in einen mittleren Abschnitt 40c und zwei äußere Abschnitte 42c unterteilen. Zur Herstellung des bistabilen Bauteils 50c wird der mittlere Abschnitt 40c durch plastische Verformung des Materials in eine Bogenform gestreckt (Fig. 11), deren konvexe Seite 20c in einer ersten stabilen Konfiguration des Wischarms 10c, die in Fig. 12 dargestellt ist, in eine erste, einer Fahrzeugscheibe zugewandte Richtung 36c weist und in einer in Fig. 13 dargestellten Arbeitskonfiguration und einer in Fig. 14 dargestellten zweiten stabilen Konfiguration in eine der ersten Richtung 36c entgegengesetzte zweite Richtung weist.

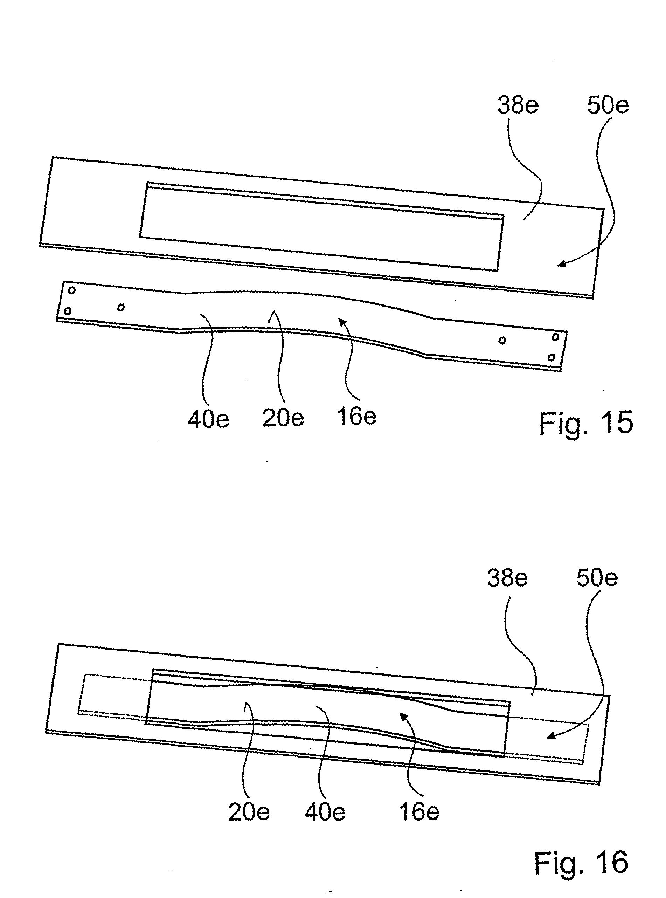

In einem weiteren alternativen Wischarm setzt sich ein bistabiles Bauteil 50e, das in Fig. 15 und 16 dargestellt ist, aus einem Rahmen 38e und einem zu einem Bogen gestreckten mittleren Abschnitt 40e zusammen. Die Teile 50e, 40e sind in Fig. 23 lose und in Fig. 24 verschweißt dargestellt.

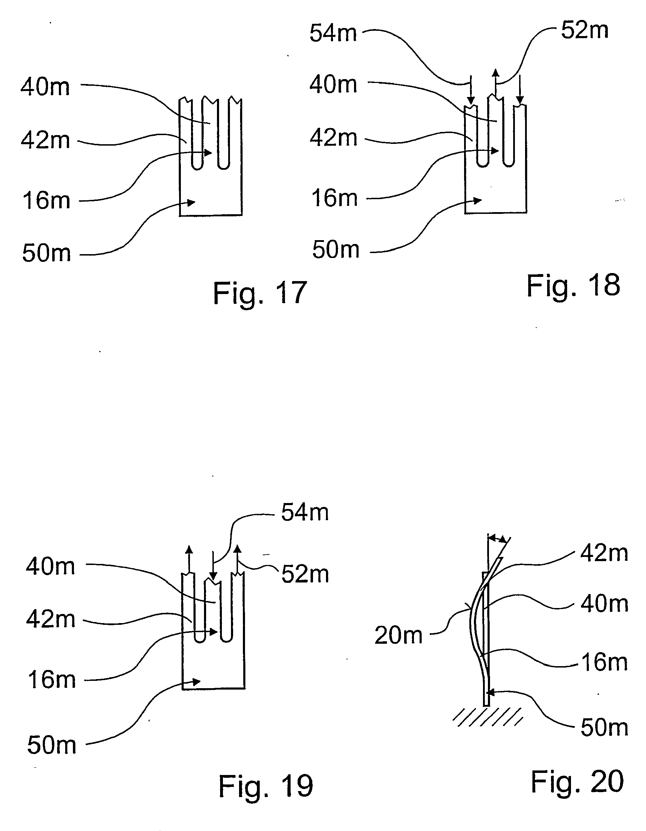

In Fig. 17 - 20 ist schematisch dargestellt, wie ein bistabiles Bauteil 50m durch Vorspannen zumindest eines Abschnitts aus einem flachen Bauteil 50m mit drei länglichen Abschnitten 40m, 42m, wie es in Fig. 17 schematisch dargestellt ist, hergestellt werden kann. In Fig. 18 wirkt eine Zugkraft 52m auf den mittleren Abschnitt 40m, auf die äußeren Abschnitte 42m wirkt eine Duckkraft 54m. Die äußeren Abschnitte 42m sind elastisch zu Bögen vorgespannt, wie dies in Fig. 20 in einer Seitenansicht des Bauteils 50m aus Fig. 18 erkennbar ist. In Fig. 19 ist dargestellt, dass eine Druckkraft 54m auf den mittleren Abschnitt 40m und eine Zugkraft 52m auf die äußeren Abschnitte 42m zu einer bogenförmigen Wölbung des mittleren Abschnitts 40m führt.

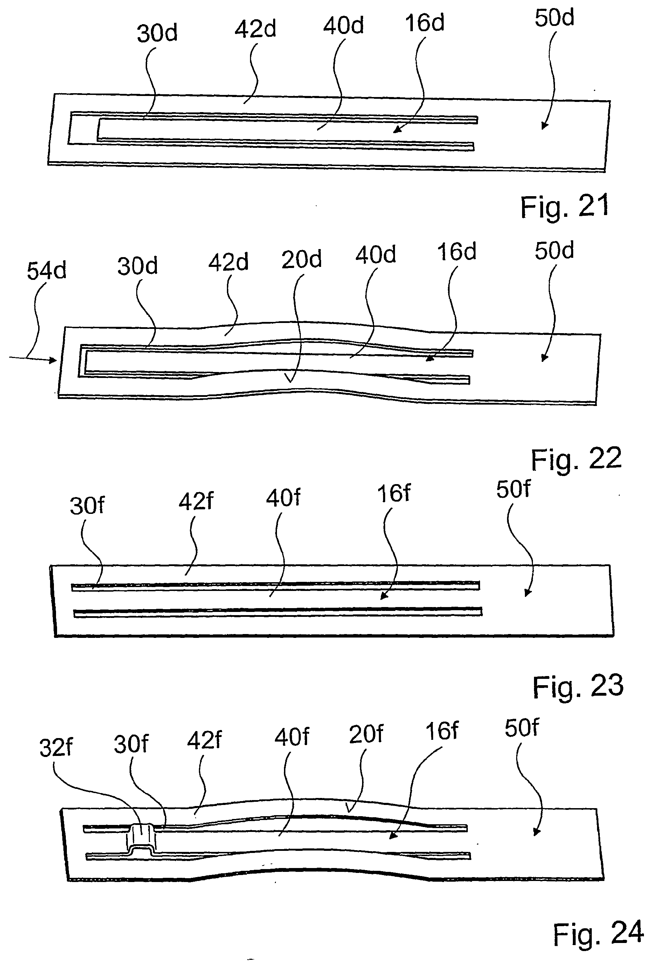

Mehrere Ausführungsbeispiele für federelastische Bauteile 50d, 50d - 50j nach dem in den Fig. 17 - 20 dargestellten Prinzip sind in Fig. 21 - 32 dargestellt. Dabei wird in dem in Fig. 21 und 22 dargestellten Ausführungsbeispiel durch eine Querverbindung 56d zwischen zwei äußeren Abschnitten 42d eine hohe Biegesteifigkeit in Wischbewegungsrichtung erreicht. In der in Fig. 22 dargestellten Konfiguration wirkt eine Druckkraft 54d in Richtung der Längserstreckung des Bauteils 50d auf die Querverbindung 56d. Die Druckkraft 54d verteilt sich auf die beiden äußeren Abschnitte 42d, die bogenförmig vorgespannt sind. In dieser Konfiguration kann das Bauteil 50d während des Einbaus in einen Wischarm durch eine Klemmverbindung im Bereich der Querverbindung 56d fixiert werden, wodurch die in den Abschnitten 42d aufgebaute innere Spannkraft am Abschnitt 40d abgestützt wird.

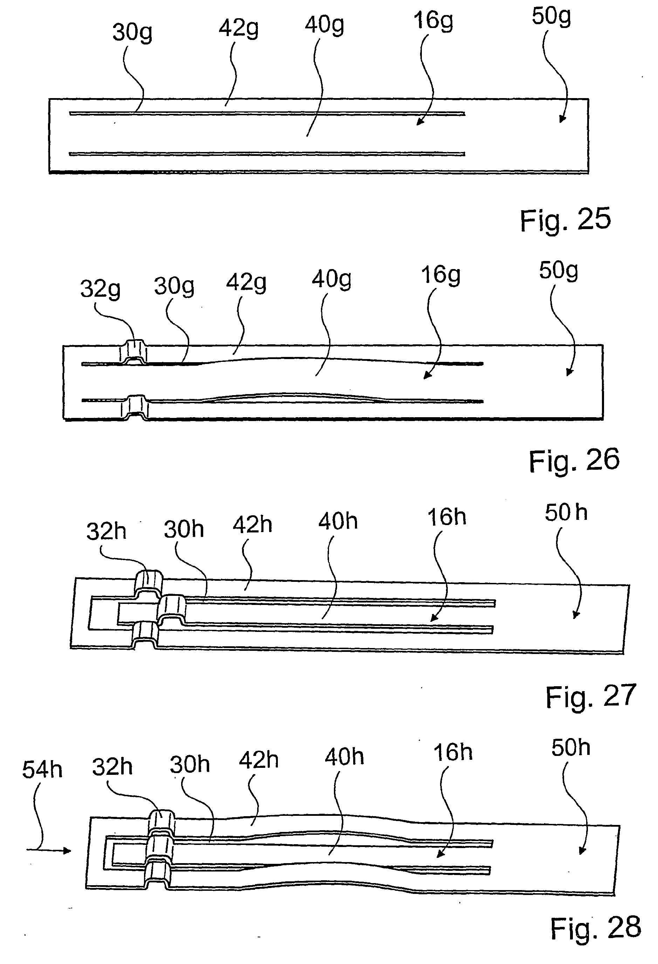

Einen vereinfachten Herstell- und Montageprozess und eine erhöhte Stabilität bietet das in Fig. 23 und 24 dargestellte Ausführungsbeispiel, in dem ein mittlerer Abschnitt 40e durch eine Sicke 32e gegenüber äußeren Abschnitten 42e verkürzt ist, so dass sich die letzteren unter Druck zu Bögen spannen, die durch eine Zugspannung im mittleren Abschnitt 40e des Bauteils 50e in ihrer Lage fixiert sind. In dem in Fig. 25 und 26 dargestellten Ausführungsbeispiel ist das gleiche Prinzip genutzt, um durch Sicken 32g zwei äußere Abschnitte 42g eines Bauteils 50g zu verkürzen und dadurch einen mittleren Abschnitt 40g zu einem Bogen zu spannen.

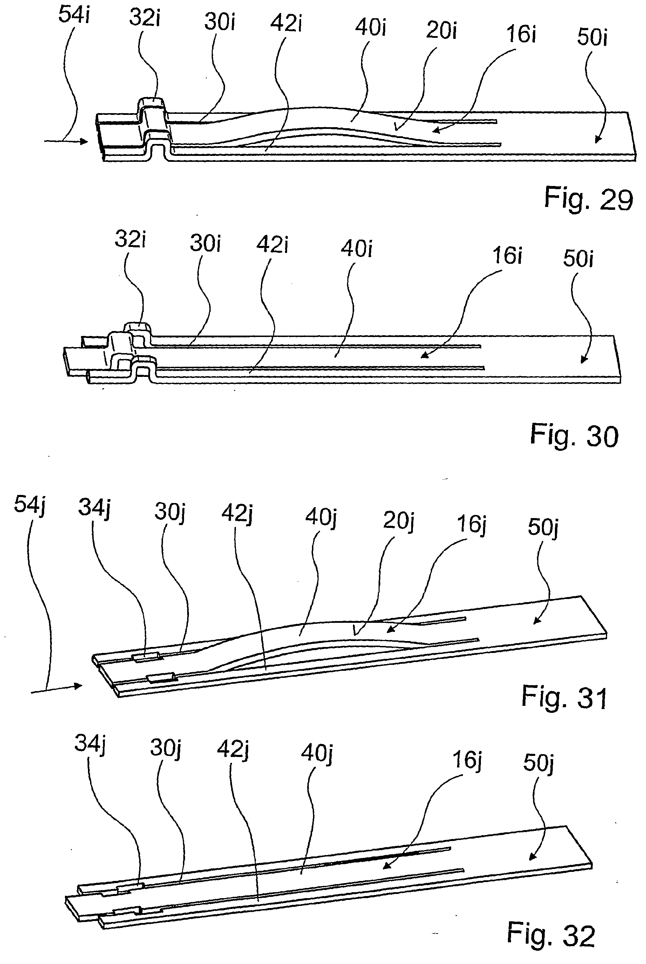

Aus dem Ausführungsbeispiel aus Fig. 21 und 22 leitet sich das in Fig. 27 und 28 dargestellte Ausführungsbeispiel ab, in dem Sicken 32h in drei Abschnitten 40h, 42h eines Bauteils 50h drei Abschnitte einer Nut darstellen, die das Fixieren einer Konfiguration mit vorgespannten Abschnitten 42h unterstützt. In der in Fig. 28 dargestellten Konfiguration kann dieselbe durch ein Einführen einer Feder in die durch die Sicken 32h gebildete Nut fixiert werden. Ein analoges Ausführungsbeispiel zur Fixierung eines bogenförmig vorgespannten mittleren Abschnitts 40i ist in den Fig. 29 und 30 dargestellt.

Eine weitere Möglichkeit zur Fixierung eines bogenförmig vorgespannten mittleren Abschnitts 40j ist in den Fig. 31 und 32 dargestellt. Sowohl der mittlere Abschnitt 40j als auch zwei äußere Abschnitte 42j weisen seitliche Ausnehmungen 34j auf, die sich in der in Fig. 31 dargestellten vorgespannten Konfiguration zu einem Rechteckloch ergänzen, durch das bei der Montage in einem Wischarm Befestigungsstifte gesteckt werden, die ein selbsttätiges Rückstellen des Bauteils 50j in eine entspannte, wie die in Fig. 32 dargestellte Konfiguration verhindern.

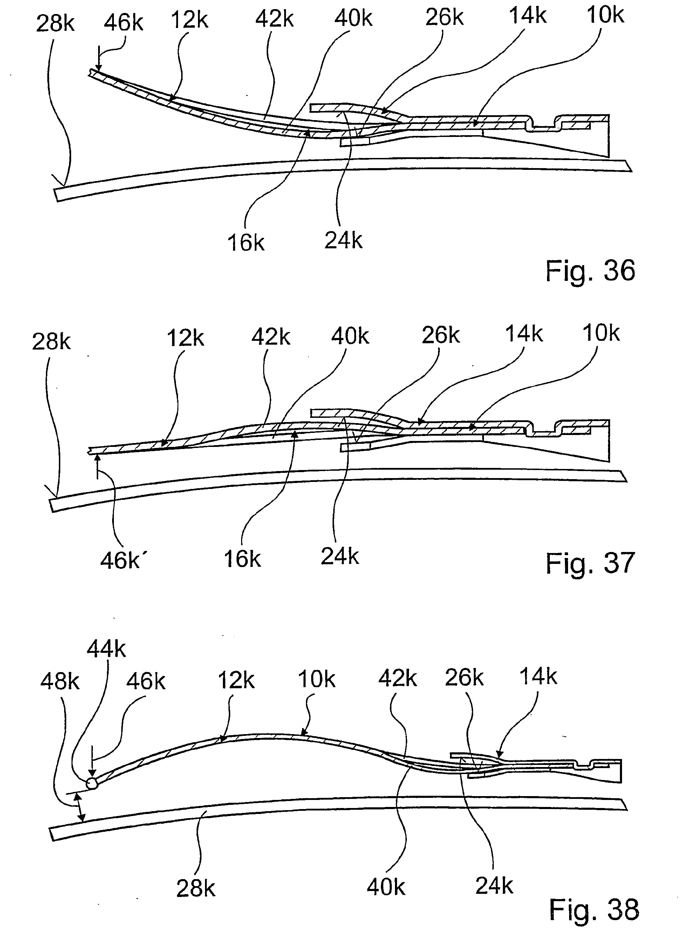

Fig. 33 - 37 zeigen Momentaufnahmen eines Vorgangs, bei dem ein weiterer alternativer, in einem Längsschnitt dargestellter Wischarm 10k mit Anschlägen 24k und 26k, die an das Befestigungsteil 14k angeformt sind, von einer Arbeitskonfiguration in eine erste stabile Konfiguration und zurück überführt wird. Ein federelastischer Teilbereich 16k mit einem vorgespannten mittleren Abschnitt 40k ist einstückig an eine Wischstange 12k angeformt. Eine Kraft 46k, 46k' greift während des Vorgangs an einem freien Ende 44k der Wischstange 12k an (Fig. 38). Dabei handelt es sich in der Arbeitskonfiguration (Fig. 33 und 37) um eine eine Auflagekraft kompensierende Gegenkraft 46k'.

Fig. 34 und 36 stellen Übergangskonfigurationen dar, während derer die dem freien Ende 44k der Wischstange 12k angreifenden Kräfte 46k' und 46k in Richtung bzw. Gegenrichtung einer Fahrzeugscheibe 28k wirken. Mittels der Anschläge 24k und 26k werden die Kräfte 46k' und 46k jeweils in einem Punkt auf einem bogenförmigen mittleren Abschnitt 40k des federelastischen Teilbereichs 16k eingeleitet. Die Anschläge 24k und 26k bewirken effektiv und unmittelbar eine Änderung der Konfiguration des Wischarms. Ein Umstülpen des mittleren Abschnitts 40k geschieht schlagartig dann, sobald der Wischarm 10k während einer Überführung des Wischarms 10k von einer ersten stabilen Konfiguration (Fig. 35) in eine Arbeitskonfiguration (Fig. 33 und 37) eine bestimmte, in Fig. 38 dargestellte Konfiguration durchlaufen hat, in der das freie Ende 44k des Wischarms 10k einen von dem Anschlag 26k bestimmten Abstand 48k von der Fahrzeugscheibe 28k aufweist. In der in Fig. 35 dargestellten stabilen Konfiguration kann vorteilhaft in einem montierten Zustand des Wischarms 10k ein Wischblatt montiert und demontiert werden.

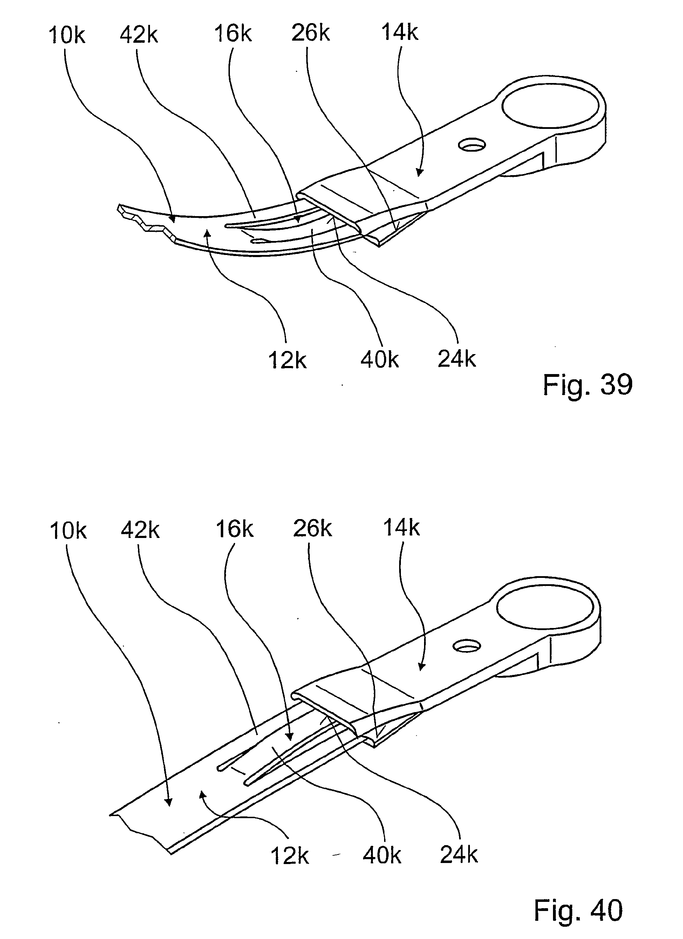

Fig. 39 und 40 zeigen einen Ausschnitt des Wischarms 10k aus Fig. 33 - 37 in räumlichen Darstellungen. Sowohl das Befestigungsteil 14k als auch die Wischstange 12k sind als Stanz-Biegeblechteil ausgeführt, wobei der untere Anschlag 26k und der obere Anschlag 24k an getrennte, zusammengenietete Bauteile des Befestigungsteils 14k angeformt sind.

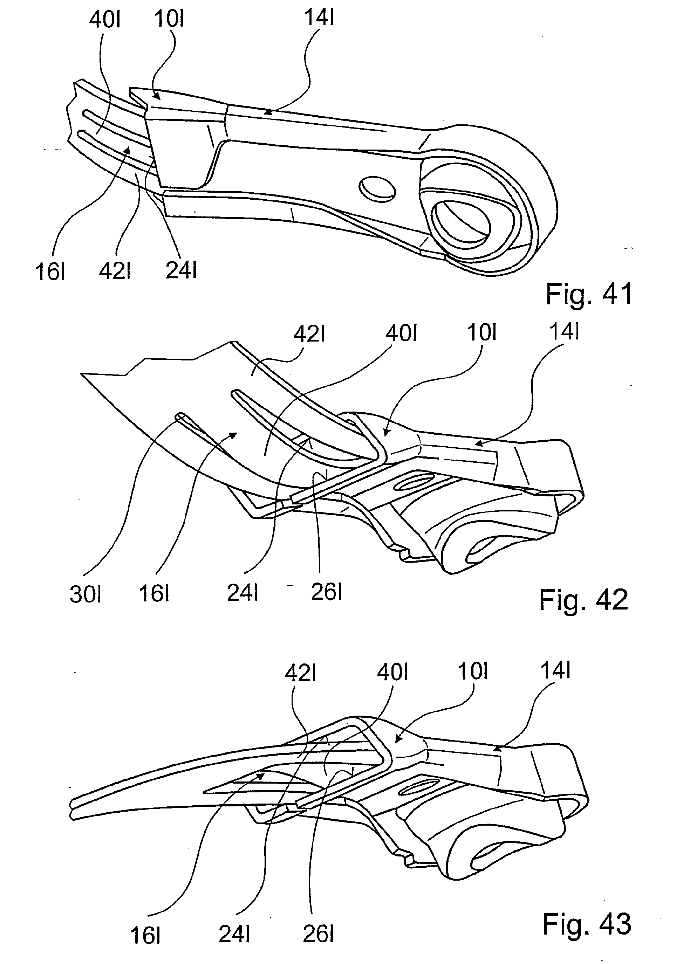

Fig. 41 - 43 zeigen einen Ausschnitt eines weiteren alternativen Wischarms 101 in räumlichen Darstellungen in zwei Konfigurationen. Ein Befestigungsteil 14l des Wischarms 10l weist Anschläge 26l und 24l auf, die einstückig aus dem Blech des Befestigungsteils 14l geformt sind. Der untere Anschlag 26l ist durch umgefalzte Laschen des Befestigungsteils 14l realisiert.

### Bezugszeichen

- 10: Wischarm
- 12: Wischstange
- 14: Befestigungsteil
- 16: Teilbereich
- 18: Ausformung
- 20: Konvexe Seite
- 22: Loch
- 24: Anschlag
- 26: Anschlag
- 28: Fahrzeugscheibe
- 30: Längsschnitt
- 32: Sicke
- 34: Ausnehmung
- 36: Richtung
- 38: Rahmen
- 40: Abschnitt
- 42: Abschnitt
- 44: Ende
- 46: Kraft
- 48: Abstand
- 50: Bauteil
- 52: Zugkraft
- 54: Druckkraft
- 56: Querverbindung

## Patentansprüche

1. Wischvorrichtung, insbesondere für ein Kraftfahrzeug, die einen Wischarm (10a - 10c, 10k, 10l) aufweist der eine Wischstange (12a, 12c, 12k) zur Befestigung eines Wischblatts, ein mit der Wischstange (12a, 12c,12k) gelenkfrei verbundenes Befestigungsteil (14a - 14c, 14k, 14l) und zumindest einen federelastischen Teilbereich (16a - 16m) umfasst, wobei der Wischarm (10a - 10c, 10k, 10l) im Wesentlichen federelastisch von einer Arbeitskonfiguration in zumindest eine erste stabile Konfiguration überführbar ist, in der das Wischblatt in einem montierten Zustand des Wischarms (10a - 10c, 10k, 10l) montierbar und demontierbar ist, **dadurch gekennzeichnet, daß** der federelastische teilbereich ein bistabiles Bauteil (50c -50j, 50 m) ist das durch Vorspannen zumindest eines Abschnitts aus einem flachen Bauteil (50c -50j, 50 m) mit drei länglichen Abschnitten (40c - 40m, 42c, 42f - 42m) hergestellt ist.

2. Wischvorrichtung nach Anspruch 1, **dadurch gekennzeichnet, dass** der Wischarm (10a - 10c, 10k, 10l) in einem demontierten Zustand eine von der ersten stabilen Konfiguration verschiedene zweite stabile Konfiguration aufweist, in die sich der Wischarm (10a - 10c, 10k, 10l) im Wesentlichen federelastisch überführen lässt.

3. Wischvorrichtung nach Anspruch 2, **dadurch gekennzeichnet, dass** die beim Überführen des Wischarms (10a - 10c, 10k, 10l) von der ersten in die zweite stabile Konfiguration auftretenden Konfigurationen die Arbeitskonfiguration enthalten.

4. Wischvorrichtung zumindest nach Anspruch 2, **dadurch gekennzeichnet, dass** der federelastische Teilbereich (16a, 16b) zumindest eine gewölbte Ausformung (18a, 18b) aufweist, deren konvexe Seite (20a - 20b) in der ersten stabilen Konfiguration in eine erste Richtung (36a, 36b) weist und in der zweiten stabilen Konfiguration in eine zweite Richtung weist.

5. Wischvorrichtung nach Anspruch 4, **dadurch gekennzeichnet, dass** der federelastische Teilbereich (16a, 16b) im Bereich der gewölbten Ausformung (18a, 18b) zumindest ein Loch (22a, 22b) aufweist.

6. Wischvorrichtung zumindest nach Anspruch 2, **dadurch gekennzeichnet, dass** der federelastische Teilbereich (16c - 16m) zumindest einen bogenförmigen Abschnitt (40c 40e, 40g, 40i - 401, 42d, 42f, 42h) aufweist, der in der ersten stabilen Konfiguration eine Krümmung in eine erste Richtung (36c) und in der zweiten stabilen Konfiguration eine Krümmung in eine zweite Richtung aufweist.

7. Wischvorrichtung nach einem der vorhergehenden Ansprüche, **dadurch gekennzeichnet, dass** zumindest ein Abschnitt (40g, 40i - 40m, 42d, 42f, 42h) des federelastischen Teilbereichs (16d, 16f - 16m) zumindest in einer stabilen Konfiguration unter einer Vorspannung steht.

8. Wischvorrichtung nach einem der vorhergehenden Ansprüche, **gekennzeichnet durch** zumindest einen Anschlag (24k, 24l, 26k, 26l), über den während eines Überführungsvorgangs zwischen zwei Konfigurationen gezielt eine Kraft im Bereich des federelastischen Teilbereichs (16k, 26l) einleitbar ist.

9. Wischvorrichtung nach Anspruch 8, **dadurch gekennzeichnet, dass** der Anschlag (24k, 24l, 26k, 26l) an das Befestigungsteil (14k, 14l) angeformt ist.

10. Wischvorrichtung nach einem der vorhergehenden Ansprüche, **dadurch gekennzeichnet, dass** zumindest ein Teil des federelastischen Teilbereichs (16k, 16l) einstückig in die Wischstange (12k) integriert ist.

## Claims

1. Wiper device, in particular for a motor vehicle, the wiper device having a wiper arm (10a-10c, 10k, 10l) which comprises a wiper rod (12a, 12c, 12k) for the fastening of a wiper blade, a fastening part (14a-14c, 14k, 14l) connected in a joint-free manner to the wiper rod (12a, 12c, 12k), and at least one spring-elastic subregion (16a-16m), wherein the wiper arm (10a-10c, 10k, 10l) can be transferred in a substantially spring-elastic manner from a working configuration into at least one first stable configuration in which the wiper blade can be fitted and removed in a fitted state of the wiper arm (10a-10c, 10k, 10l), **characterized in that** the spring-elastic subregion is a bistable component (50c-50j, 50m) which is produced from a flat component (50c-50j, 50m) with three elongate sections (40c-40m, 42c, 42f-42m) by prestressing at least one section.

2. Wiper device according to Claim 1, **characterized in that** the wiper arm (10a-10c, 10k, 10l) in a removed state has a second stable configuration which is different from the first stable configuration and into which the wiper arm (10a-10c, 10k, 10l) can be transferred in a substantially spring-elastic manner.

3. Wiper device according to Claim 2, **characterized in that** the configurations occurring when the wiper arm (10a-10c, 10k, 10l) is transferred from the first into the second stable configuration contain the working configuration.

4. Wiper device at least according to Claim 2, **characterized in that** the spring-elastic subregion (16a, 16b) has at least one curved formation (18a, 18b), the convex side (20a-20b) of which faces in a first direction (36a, 36b) in the first stable configuration and faces in a second direction in the second stable configuration.

5. Wiper device according to Claim 4, **characterized in that** the spring-elastic subregion (16a, 16b) has at least one hole (22a, 22b) in the region of the curved formation (18a, 18b).

6. Wiper device at least according to Claim 2, **characterized in that** the spring-elastic subregion (16c-16m) has at least one curved section (40c, 40e, 40g, 40i-40l, 42d, 42f, 42h) which has a curvature in a first direction (36c) in the first stable configuration and a curvature in a second direction in the second stable configuration.

7. Wiper device according to one of the preceding claims, **characterized in that** at least one section (40g, 40i-40m, 42d, 42f, 42h) of the spring-elastic subregion (16d, 16f-16m) is under a prestress at least in one stable configuration.

8. Wiper device according to one of the preceding claims, **characterized by** at least one stop (24k, 24l, 26k, 26l) via which a force can be introduced in a specific manner in the region of the spring-elastic subregion (16k, 26l) during a transfer operation between two configurations.

9. Wiper device according to Claim 8, **characterized in that** the stop (24k, 24l, 26k, 26l) is integrally formed on the fastening part (14k, 14l).

10. Wiper device according to one of the preceding claims, **characterized in that** at least one part of the spring-elastic subregion (16k, 16l) is integrally integrated in the wiper rod (12k).

## Revendications

1. Dispositif d'essuyage notamment pour un véhicule automobile comportant un bras d'essuie-glace (10a-10c, 10k, 10) avec une tige d'essuie-glace (12a, 12c, 12k) pour fixer un balai d'essuie-glace, munie d'une pièce de fixation (14a-14c, 14k, 14l) reliée sans articulation à la tige d'essuie-glace (12a-12c, 12k) et d'au moins une zone partielle (16a-16m) élastique comme un ressort,
le bras d'essuie-glace (10a-10c, 10k, 10l) pouvant passer d'une manière pratiquement élastique comme un ressort, d'une configuration de travail dans au moins une première configuration stable dans laquelle on peut monter et démonter le balai d'essuie-glace le bras d'essuie-glace (10a-10c, 10k, 10l) étant à l'état monté,
**caractérisé en ce que**
la zone partielle, élastique comme un ressort, est une pièce bistable (10c-10j, 10m) réalisée par la précontrainte d'au moins un segment en une pièce plate (50c-50j, 50m), à trois segments allongés (40c-40m, 42c, 42f-42m).

2. Dispositif d'essuie-glace selon la revendication 1,
**caractérisé en ce que**
le bras d'essuie-glace (10a-10c, 10k, 101), à l'état démonté, présente une seconde configuration, stable, différente de la première configuration stable, et dans laquelle le bras d'essuie-glace (10a-10c, 10k, 10l) peut arriver pratiquement de façon élastique comme un ressort.

3. Dispositif d'essuie-glace selon la revendication 2,
**caractérisé en ce que**
les configurations que l'on obtient en faisant passer le bras d'essuie-glace (10a-10c, 10k, 10l) de la première à la deuxième configuration stable comprennent la configuration active.

4. Dispositif d'essuie-glace selon au moins la revendication 2,
**caractérisé en ce que**
la plage partielle élastique comme un ressort (16a, 16b) comporte au moins une déformation bombée (18a, 18b) dont le côté convexe (20a-20b) est tourné dans une première direction (36a, 36b) pour la première configuration stable et dans une seconde direction pour la seconde configuration stable.

5. Dispositif d'essuie-glace selon la revendication 4,
**caractérisé en ce que**
la zone partielle (16a, 16b) élastique comme un ressort comporte au moins un trou (22a, 22b) dans la zone de la déformation bombée (18a, 18b).

6. Dispositif d'essuie-glace selon au moins la revendication 2,
**caractérisé en ce que**
la zone partielle, élastique comme un ressort (16a-16m), comprend au moins un segment de forme courbe (40c, 40e, 40g, 401-401, 42d, 42f, 42h), ayant dans la première configuration stable une courbure dans une première direction (36c) et dans la seconde configuration stable, une courbure dans une seconde direction.

7. Dispositif d'essuie-glace selon l'une des revendications précédentes,
**caractérisé en ce qu'**
au moins un segment (40g, 40i-40m, 42d, 42f, 42h) de la zone partielle (16d, 16f-16m), élastique comme un ressort, passe au moins dans une configuration stable sous précontrainte.

8. Dispositif d'essuie-glace selon l'une des revendications précédentes,
**caractérisé par**
au moins une butée (24k, 24l, 26k, 26l) permettant d'induire de manière ciblée au cours du passage entre deux configurations, une force au niveau de la zone partielle (16k, 26l) élastique comme un ressort.

9. Dispositif d'essuie-glace selon la revendication 8,
**caractérisé en ce que**
la butée (24k, 24l, 26k, 26l) est formée sur la pièce de fixation (14k, 14l).

10. Dispositif d'essuie-glace selon l'une des revendications précédentes,
**caractérisé en ce qu'**
au moins une partie de la zone partielle (16k, 16l) élastique comme un ressort, est intégrée en une seule pièce dans la tige d'essuie-glace (12k).
